# EUROPEAN PATENT SPECIFICATION

(11) **EP 4 194 462 B1**
(45) Date of publication and mention of the grant of the patent: **15.10.2025**
(21) Application number: 21213073.6
(22) Date of filing: 08.12.2021
(51) Int. Cl.: C07F 7/14, B01J 23/42, B01J 31/02, B01J 31/22, C08G 77/12, C08G 77/20, C08L 83/04, B01J 31/16

(54) **METHOD OF MAKING 3-HALOPROPYLTRIHALOSILANES BY HYDROSILYLATION**
VERFAHREN ZUR HERSTELLUNG VON 3-HALOPROPYLTRIHALOGENSILANEN DURCH HYDROSILYLIERUNG
PROCÉDÉ DE FABRICATION DE 3-HALOPROPYLTRIHALOSILANES PAR HYDROSILYLATION

(43) Date of publication of application: 14.06.2023
(73) Proprietor: Evonik Operations GmbH, 45128 Essen (DE)
(72) Inventor: MARION, Nicolas, 68300 Saint-Louis (FR); MERTSCH, Horst, 79618 Rheinfelden (DE)
(74) Representative: Evonik Patent Association

(56) References cited:
- CN-A- 102 127 104
- CN-A- 113 444 122
- GIGLER PETER ET AL: "Mechanistic insights into the hydrosilylation of allyl compounds - Evidence for different coexisting reaction pathways", JOURNAL OF CATALYSIS, vol. 295, 25 September 2012 (2012-09-25), pages 1 - 14, XP028945617, ISSN: 0021-9517, DOI: 10.1016/J.JCAT.2012.06.006

## Description

The present invention relates to a method for synthesizing at least one 3-halopropyltrihalosilane compound, a catalyst composition and its use in a hydrosilylation reaction as well as a reactive composition.

### BACKGROUND OF THE INVENTION

Hydrosilylation reactions, also called catalytic hydrosilation, are amongst the most important reactions to produce functional silanes. They describe the addition of Si-H bonds across unsaturated bonds. An important group of silanes produced by this reaction are 3-halopropyltrihalosilane compounds such as 3-chloropropyltrichlorosilane (also referred to as trichloro(3-chloropropyl)silane). They are conventionally prepared by hydrosilylation of an allyl halide such as allylchloride and a H-silane such as a trihalosilane (e.g. trichlorosilane) in the presence of platinum catalysts. This type of reactions generally suffers from moderate selectivity and yield. Side-reactions typically occurring are the reduction of allyl halide to propene concomitantly with the formation of silicontetrahalides such as SiCl₄ and SiBr₄. The then formed propene eventually reacts with one equivalent of the H-silane yielding propyltrihalosilanes such as propyltrichlorosilane. Also, the isomerization of the used unsaturated compounds often unfavorably occurs.

Various attempts have been reported in the prior art to improve the selectivity and yield of the aforementioned reaction. Apart from using different sources as metal catalysts, cocatalysts have been employed to improve yield and selectivity. Among those cocatalysts are phosphines, oxygen, organic oxo-compounds like ketones and aldehydes, tertiary alcohols, alcoholates and nitrogen-based compounds to name but a few.

DE 1 156 073 discloses the use of trialkylamines such as triethylamine and tributylamine as cocatalysts in the above reaction in combination with chloroplatinic acid or platinum on charcoal.

US 4,292,434 publishes the synthesis of 3-chloropropyltrichlorosilane using amines as cocatalyst for chloroplatinic acid or platinum dihalide as main catalyst. The procedure requires the preparation of the catalyst in a step preceding the synthesis of the desired silane. This additional step is naturally unwanted as it increases the time required to preparing the desired silane, increasing unfavorably the cost and time needed for its preparation.

Examples 3 and 4 of US 3,925,434 disclose the reaction of allyl chloride with trichlorosilane in the presence of a catalyst system consisting of chloroplatinic acid and phenothiazine. The selectivity of the reaction is moderate only (see table I in the cited document). Many by-products are formed and a large fraction in the crude mixture forms propyltrichlorosilane. Particularly, the removal of the chlorine atom from the propyl group is undesired as the thus obtained alkylsilane cannot be further functionalized.

DE 102 43 180 discloses the preparation of 3-chloropropyltrichlorosilane using a platinum catalyst and a ligand selected from aliphatic amides, nitriles and amines. Preferred amides are N,N-dimethylacetamide and N,N-dimethylformamide, preferred amines are N,N-dimethylbutylamine, *tert*-butylamine or triethylamine.

CN 108069996 reports the making of 3-chloropropyltrichlorosilane using chloroplatinic acid as platinum catalyst and formamide and N-alkyl derivatives thereof. CN 102127104 A discloses a process to prepare 3-chloropropyl trichlorosilane. Generally, the propositions of the prior art suffer from unsatisfying yield and / or selectivity.

### OBJECTIVE OF THE INVENTION

It is therefore the objective of the present invention to overcome the shortcomings of the prior art. It is a further objective of the present invention to improve the selectivity of the preparation of 3-halopropyltrihalosilane compounds from allyl halide and H-silane as starting materials. It is further desirable to enhance the yield of the 3-halopropyltrihalosilane compounds starting from the aforementioned reactants.

### SUMMARY OF THE INVENTION

These objectives are solved by the method for synthesizing at least one 3-halopropyltrihalosilane compound according to the invention comprising reacting:
I) at least one unsaturated compound selected from the group consisting of allyl halide and methallyl halide; and
II) at least one H-silane selected from the group consisting of trihalosilane, methyldihalosilane and dimethylhalosilane;
characterized in that the reaction of the at least one unsaturated compound and the at least one H-silane is carried out in the presence of:
III) a Karstedt catalyst; and
IV) at least one cocatalyst according to formula (A): 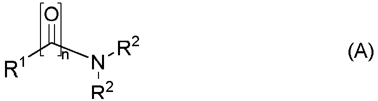 wherein
   R¹ is an aryl group;
   each R² is independently an alkyl group; and
   n is selected from 0 and 1.

By reacting components I and II in the presence of III and IV, the at least one 3-halopropyltrihalosilane compound is obtained.

The method according to the invention allows for high yields of 3-halopropyltrihalosilane compounds to be obtained. Further, the selectivity of the inventive method is enhanced resulting in less undesired side-products such as propyltrihalosilanes and silicontetrahalides. In the context of the present invention, selectivity means in particular the selectivity of 3-halopropyltrihalosilane compounds over propyltrihalosilane. An improved selectivity facilitates the purification of the desired 3-halopropyltrihalosilane compounds. The inventive method further is ecologically and environmentally benign and more atom-efficient than the prior art methods.

Preferred embodiments solving the above-described objections particularly well are described in the following description and in the dependent claims.

### DETAILED DESCRIPTION OF THE INVENTION

Percentages throughout this specification are weight-percentages (wt.-% or weight-%) unless stated otherwise. Consequently, parts-per-million (abbreviated as ppm) are also weight-based and correspond to mg/kg. Concentrations given in this specification refer to the volume or mass of the entire compositions, solutions or dispersions unless stated otherwise.

The term "alkyl" according to the present invention comprises branched or unbranched alkyl groups. C1-CX-alkyl in this specification and in the claims refers to alkyl groups having 1 to X carbon atoms (X being an integer). C1-C8-alkyl for example includes, among others, methyl, ethyl, n-propyl, iso-propyl, n-butyl, isobutyl, sec-butyl, tert-butyl, n-pentyl, iso-pentyl, sec-pentyl, tert-pentyl, neo-pentyl, hexyl, heptyl and octyl. Substituted alkyl groups may theoretically be obtained by replacing at least one hydrogen by a functional group.

The term "aryl" according to the invention refers to ring-shaped aromatic hydrocarbon residues, for example phenyl or naphthyl where individual ring carbon atoms are optionally replaced by N, O and/or S, for example benzothiazolyl. Preferably, none of said carbon atoms is replaced by other elements such as those described hereinbefore. Furthermore, aryl groups are optionally substituted by replacing a hydrogen atom in each case by a functional group. The term C5-CX-aryl refers to aryl groups having 5 to X carbon atoms (optionally replaced by N, O and/or S) in the ring-shaped aromatic group (X naturally being an integer). C5-C6-aryl is preferred, C6-aryl is even more preferred, unless stated otherwise.

Unless stated otherwise, above-described groups are substituted or unsubstituted. Functional groups as substituents are preferably selected from the group consisting of halide (chlorine, bromine), ether (-OR), thioether (-SR), amine (-NH₂, NHR, and NR₂), imine, amide, ketone, ester, alkoxysilyl (-Si(OR)₃), alkylsilyl (-SiR₃), thiol (-SH) and hydroxyl group (-OH). Preferably, above-described groups are unsubstituted.

If more than one residue is to be selected from a given group, each of the residues is selected independently from each other unless stated otherwise hereinafter, meaning they can be selected to be the same members or different members of said group. Methods described herein comprise the named method steps. The named method steps are preferably carried out in the given order unless stated otherwise. The methods optionally comprise further method steps to be carried out before, after and/or between said method steps. Preferences and details described for one aspect of the present invention apply *mutatis mutandis* to the other aspects thereof unless stated otherwise or technically unfeasible.

The method according to the invention allows for the preparation of 3-halopropyltrihalosilane compounds. 3-halopropyltrihalosilane compounds in the context of the present invention include *inter alia* 3-halopropyltrihalosilane, 3-halopropylmethyldihalosilane, or 3-halopropyldimethylhalosilane and those compounds described in the following. Preferred 3-halopropyltrihalosilane compounds are selected from the group consisting of 3-chloropropyltrichlorosilane, 3-bromopropyltrichlorosilane, 3-chloro-2-methyl-propyltrichlorosilane and 3-bromo-2-methyl-propyltrichlorosilane. A higher preference is given to 3-chloropropyltrichlorosilane and 3-chloro-2-methyl-propyltrichlorosilane as the at least one 3-halopropyltrihalosilane compound, 3-chloropropyltrichlorosilane is most preferred in this context.

The at least one unsaturated compound is selected from the group consisting of allyl halide such as allyl chloride (also referred to as 3-Chloroprop-1-ene, CAS no. 107-05-1) and methallyl halide such as methallyl chloride (also referred to as 3-Chloro-2-methylprop-1-ene, CAS 563-47-3). The halide is preferably chloride. Preference is given to allyl halide. It is even more preferred that the at least one unsaturated compound is allyl chloride.

The at least one H-silane is selected from the group consisting of trihalosilane, methyldihalosilane and dimethylhalosilane. A H-silane comprises at least one hydrogen atom bound to the silicon atom via a single bond. The at least one H-silane is preferably selected from the group consisting of trihalosilane and methyldihalosilane. Even more preferred is trihalosilane. The halogen atoms present in the at least one H-silane are preferably independently selected from the group consisting of chlorine and bromine, more preferably the halogen atoms are chlorine atoms. Particularly preferably, the at least one H-silane is trichlorosilane (H-SiCl₃).

The molar ratio of the at least one unsaturated compound to the at least one H-silane preferably ranges from 2:1 to 0.2:1, more preferably from 1.5:1 to 0.5:1 and even more preferably from 1.2:1 to 0.8:1

The Karstedt catalyst is known in the art. A Karstedt catalyst is a platinum complex of 1,1,3,3-tetramethyl-1,3-divinyldisiloxane (CAS no. 68478-92-2). The Karstedt catalyst is typically employed as alcoholic solution. The alcohol in this context is preferably selected from the group consisting of methanol, ethanol, *n*-propanol, *iso*-propanol and mixtures of the aforementioned with particular preference given to *iso*-propanol. The weight ratio of the at least one alcohol to the Karstedt catalyst preferably ranges from 20:1 to 1:10, preferably from 10:1 to 1:5, more preferably from 5:1 to 1:2.

The molar ratio of the Karstedt catalyst and the at least one unsaturated compound preferably ranges from 1:10 to 1:10,000,000, more preferably from 1:100 to 1:1,000,000, even more preferably from 1:1,000 to 1:100,000.

The at least one cocatalyst is in accordance with formula (A): 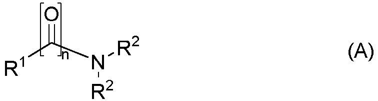 wherein
R¹ is an aryl group;
each R² is independently an alkyl group; and
n is selected from 0 and 1.

R¹ is preferably an unsubstituted aryl group, more preferably an unsubstituted C5-C12-aryl, even more preferably an unsubstituted C5-C6-aryl, most preferably a (unsubstituted) phenyl group. R² is preferably a C1-C4-alkyl group, more preferably a methyl group. n is preferably 1.

Most preferable, the at least one cocatalyst is selected from the group consisting of N,N-dimethylaniline and *N*,*N*-dimethylbenzamide.

The molar ratio of the at least one cocatalyst according to formula (A) to the Karstedt catalyst preferably ranges from 1 : 1 to 100 : 1, more preferably from 2 : 1 to 50 : 1, even more preferably from 5 : 1 to 25 : 1.

Preferably, the reaction of the at least one unsaturated compound and the at least one H-silane is carried out in at least one solvent, the solvent being preferably the at least one 3-halopropyltrihalosilane compound applying the preferences outlined hereinbefore. Other solvents can be selected based on routine experiments by the person skilled in the art. However, the at least one 3-halopropyltrihalosilane compound as the at least one solvent surprisingly increases the yield and selectivity of the reaction.

Preferably, the reaction of the at least one unsaturated compound and the at least one H-silane is carried out at a temperature ranging from 30 to 250°C, preferably from 50 to 220°C, more preferably from 80 to 200°C.

The duration of the reaction of the at least one unsaturated compound and the at least one H-silane is not particularly limited. The reaction can be carried out until the at least one unsaturated compound and/or the at least one H-silane are consumed. Typically, the reaction of the at least one unsaturated compound and the at least one H-silane is carried out for 1 min to 24 h, preferably for 1 to 12 h, more preferably for 2 to 6 h.

Preferably, the reaction of the at least one unsaturated compound and the at least one H-silane is carried out in an inert atmosphere. The person skilled in the art is aware of various ways how to provide an inert atmosphere for this purpose. A particularly convenient method is to carry out the reaction in an inert gas such as nitrogen, argon, or a mixture of the aforementioned.

In one embodiment of the present invention, the at least one unsaturated compound is allyl chloride, the at least one H-silane is trichlorosilane and the at least one cocatalyst according to formula (A) is selected from the group consisting of *N*,*N*-dimethylaniline and *N*,*N*-dimethylbenzamide.

The method according to the invention preferably comprises the following method steps to be carried out in the given order:
A1) mixing the at least one H-silane, the Karstedt catalyst and the at least one complexing agent according to formula (A) such that a premixture is obtained; and
A2) adding the at least one unsaturated compound to the premixture.

By allowing the mixture obtained in method step A2 to react, the 3-halopropyltrihalosilane compound is obtained. It is preferred that the at least one unsaturated compound is added continuously in method step A2. A continuous addition in the context of the present invention is to be understood that the at least one unsaturated compound is added for a certain period of time rather than in one step. A certain period of time means 1 to 25% of the total duration of the reaction, preferably 2 to 10%.

Optionally, the method for synthesizing at least one 3-halopropyltrihalosilane compound according to the invention is succeeded by a method step A3:
A3) purifying the 3-halopropyltrihalosilane compound.

The person skilled in the art is aware of various methods how to purify said compound. For example, the mixture obtained is purified by at least one method selected from the group consisting of distillation, filtration, precipitation or a combination of the aforementioned with distillation being the most preferred purification method.

The present invention further concerns a **catalyst composition** suitable for mediating a hydrosilylation reaction, preferably the hydrosilylation reaction of at least one unsaturated compound selected from the group consisting of allyl halide and methallyl halide and at least one H-silane selected from the group consisting of trihalosilane, methyldihalosilane and dimethylhalosilane to give the 3-halopropyltrihalosilane compound, comprising
α) a Karstedt catalyst; and
β) at least one cocatalyst according to formula (A) : 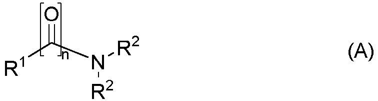 wherein
   R¹ is an aryl group;
   each R² is independently an alkyl group; and
   n is selected from 0 and 1.

The catalyst composition according to the invention can mediate (or catalyze) a hydrosilylation reaction, especially the aforementioned reaction, *i*.*e*. in the latter case it allows the at least one unsaturated compound and the at least one H-silane to be converted into the 3-halopropyltrihalosilane compound, without necessarily undergoing permanent change itself.

Another aspect of the present invention is directed at the **use of the catalyst composition according to the invention** in a hydrosilylation reaction, preferably in the hydrosilylation reaction of at least one unsaturated compound selected from the group consisting of allyl halide and methallyl halide and at least one H-silane selected from the group consisting of trihalosilane, methyldihalosilane and dimethylhalosilane to give the 3-halopropyltrihalosilane, compound.

In a further aspect of the present invention, it pertains to a **reactive composition** comprising
a) at least one unsaturated compound selected from the group consisting of allyl halide and methallyl halide;
b) at least one H-silane selected from the group consisting of trihalosilane, methyldihalosilane and dimethylhalosilane;
c) a Karstedt catalyst; and
d) the at least one cocatalyst according to formula (A): 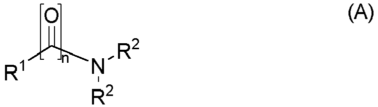 wherein
   R¹ is an aryl group;
   each R² is independently an alkyl group; and
   n is selected from 0 and 1.

The reactive composition can be used for synthesizing the at least one 3-halopropyltrihalosilane compound.

The amount of the at least one unsaturated compound preferably ranges from 5 weight-% to 80 weight-%, more preferably from 10 weight-% to 60 weight-%, even more preferably from 15 weight-% to 50 weight-%, based on the total amount of the reactive composition.

The amount of the at least one H-silane preferably ranges from 10 weight-% to 90 weight-%, more preferably from 20 weight-% to 85 weight-%, even more preferably from 30% to 80%, based on the total amount of the reactive composition.

The amount of the Karstedt catalyst preferably ranges from 0.1 ppm to 10 weight-%, more preferably from 0.5 ppm to 1 weight-%, even more preferably from 1 ppm to 0.1 weight-%, based on the total amount of the reactive composition.

The amount of the at least one cocatalyst according to formula (A) preferably ranges from 0.1 ppm to 10 weight-%, more preferably from 0.5 ppm to 5 weight-%, even more preferably from 1 ppm to 1%, based on the total amount of the reactive composition.

The reactive composition preferably comprises at least one solvent, the solvent being preferably selected from those described hereinbefore. The amount of the at least one solvent in the reactive composition preferably ranges from 10 weight-% to 90 weight-%, more preferably from 20 weight-% to 80 weight-%, even more preferably from 30 weight-% to 70 weight-%, based on the total amount of the reactive composition. The amounts of the aforementioned components can optionally be reduced by the amount of the solvent.

Above-described amounts preferably refer to the total amounts used prior to the start of the reaction.

The present invention allows for a simple and economic hydrolysilylation reaction with high yields and selectivities to be carried out.

The invention will now be illustrated by reference to the following non-limiting examples.

### EXAMPLES

### Synthetic procedure I:

A 100 ml four-necked flask equipped with a Liebig condenser was placed in an oil bath and was then charged under a nitrogen atmosphere with 36.5 g 3-chloropropyltrichlorosilane, 15.0 g trichlorosilane, Karstedt catalyst (20 weight-% platinum in iso-propanol, 64 mg platinum per kg of the reactive composition) and a cocatalyst, if any, in the amount given in table 1. The Liebig condenser itself was connected to a cooling trap (iso-propanol / dry ice). Via syringe pump, 8.5 g allyl chloride was added to the mixture (1 mL/min). After complete addition of the allyl chloride, the oil bath was heated to 180 °C until the bottoms temperature reached said temperature but at least for 3 h. The results are listed in table 1.

**GC analysis:** Chromatograms were obtained using an Agilent 6890 N gas chromatograph equipped with a Restek RTX 200 column (L: 60 m, ID: 0.53 mm, d_{f}: 3 µm) and applying the following temperature program: Temp: 40°C; Init Time: 7.00 min; Rate: 15 °C/min; Final Temp: 240°C; Final Time: 10.00 min; Inj. Temp: 250°C; Det. Temp: 280°C. The retention times for the relevant compounds were as follows: 8.26 min, trichlorosilane; 9.70 min, tetrachlorosilane; 10.01 min, allyl chloride; 15.53 min, propyltrichlorosilane; 19.45 min, 3-chloropropyltrichlorosilane.

### Selectivity

The selectivity was calculated by dividing the GC area of 3-chloropropyltrichlorosilane by the GC area of silicon tetrachloride. As for every molecule of silicon tetrachloride a molecule of highly undesired propyltrichlorosilane is produced in the hydrosilylation reaction, the amount of silicon tetrachloride is a convenient method of assessing the selectivity of 3-chloropropyltrichlorosilane over propyltrichlorosilane.

**Table 1**

| **#** | **Pt [ppm]** | **cocatalyst** | **[ppm]** | **molar ratio additive** / **Pt** | **GC area [%]** | | | **selectivity** |
|---|---|---|---|---|---|---|---|---|
| | | | | | **trichlorosilane** | **allyl chloride** | **3-chloropropyltrichlorosilane** | |
| 1° | 64 | none | | | 0.1 | 3.7 | 71.1 | 1.6 |
| 2° | 64 | glyme | 425 | 14 | 0.4 | 3.4 | 71.2 | 1.8 |
| 3° | 64 | diglyme | 425 | 10 | 0.2 | 3.6 | 71.5 | 2.0 |
| 4° | 64 | dimethylacetamide | 425 | 15 | 0.15 | 0.82 | 89.2 | 6.9 |
| 5° | 64 | acetamide | 425 | 22 | 1.2 | 0 | 88.3 | 6.1 |
| 6° | 64 | methylacetamide | 425 | 18 | 3.5 | 1.8 | 83.1 | 6.7 |
| 7° | 64 | N,N-dimethylpropionamide | 425 | 13 | 0.7 | 0.03 | 87.9 | 6.8 |
| 8* | 64 | N,N-dimethylaniline | 640 | 16 | 0.5 | 0.2 | 89.1 | 7.8 |
| 9* | 64 | N,N-dimethylbenzamide | 425 | 9 | 0.17 | 0.3 | 88.4 | 7.5 |

| | | | | | | | | |
|---|---|---|---|---|---|---|---|---|
| ° comparative examples, * examples according to the invention | | | | | | | | |

The method according to the invention using the cocatalyst according to formula (A) gave the best selectivity by far. Whereas a number of cocatalysts, such as acetamide or dimethylacetamide, proved efficient in comparison to a reference reaction without any cocatalyst, only the use of compounds following formula (A), in our examples N,N-dimethylaniline and N,N-dimethylbenzamide, yielded selectivity greatly above 7.

### Synthetic procedure II:

The synthetic procedure described above (synthetic procedure I) was repeated with the replacement of the Karstedt catalyst for chloroplatinic acid. The results are shown in table 2 below.

**Table 2**

| **#** | **Pt [ppm]** | **cocatalyst** | **[ppm]** | **molar ratio additive** / **Pt** | **GC area [%]** | | | **selectivity** |
|---|---|---|---|---|---|---|---|---|
| | | | | | **trichlorosilane** | **allyl chloride** | **3-chloropropyltrichlorosilane** | |
| 1° | 64 | N,N-dimethylaniline | 640 | 16 | 1.3 | 0.5 | 82.6 | 2.8 |
| 2° | 64 | N,N-dimethylbenzamide | 425 | 9 | 0.7 | 0.1 | 87.3 | 5.8 |

| | | | | | | | | |
|---|---|---|---|---|---|---|---|---|
| ° comparative example | | | | | | | | |

The results presented in table 2 show the strong impact of the platinum source on the outcome of the reaction. In particular, while the yield was only slightly lowered when going from the Karstedt catalyst to chloroplatinic acid. The most obvious effect can be seen on the much lower selectivity obtained in the latter case. This observation is a testimony to the uniqueness of the combination of the Karstedt catalyst and a cocatalyst of formula (A) in the hydrosilylation reaction, especially the one described in this specification.

Other embodiments of the present invention will be apparent to those skilled in the art from a consideration of this specification or practice of the invention disclosed herein. It is intended that the specification and examples be considered as exemplary only, with the true scope of the invention being defined by the following claims only.

## Claims

1. A method for synthesizing at least one 3-halopropyltrihalosilane compound comprising reacting:
I) at least one unsaturated compound selected from the group consisting of allyl halide and methallyl halide; and
II) at least one H-silane selected from the group consisting of trihalosilane, methyldihalosilane and dimethylhalosilane;
**characterized in that** the reaction of the at least one unsaturated compound and the at least one H-silane is carried out in the presence of:
III) a Karstedt catalyst; and
IV) at least one cocatalyst according to formula (A): 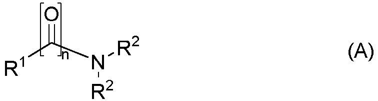 wherein
R¹ is an aryl group;
each R² is independently an alkyl group; and
n is selected from 0 and 1.

2. The method according to claim 1 **characterized in that** R¹ is a phenyl group.

3. The method according to any one of claims 1 and 2 **characterized in that** R² is a C1-C4-alkyl group, preferably a methyl group.

4. The method according to any one of the preceding claims **characterized in that** the molar ratio of the at least one cocatalyst to the Karstedt catalyst ranges from 1 : 1 to 100 : 1, preferably from 2 : 1 to 50 : 1, more preferably from 5 : 1 to 25 : 1.

5. The method according to any one of the preceding claims **characterized in that** the molar ratio of the at least one unsaturated compound to the at least one H-silane ranges from 2 : 1 to 0.2 : 1, preferably from 1.5 : 1 to 0.5 : 1, more preferably from 1.2 : 1 to 0.8 : 1.

6. The method according to any one of the preceding claims **characterized in that** the reaction of the at least one unsaturated compound and the at least one H-silane is carried out in at least one solvent, the solvent being preferably the at least one 3-halopropyltrihalosilane compound.

7. The method according to any one of the preceding claims **characterized in that** the reaction of the at least one unsaturated compound and the at least one H-silane is carried out at a temperature ranging from 30 to 250°C, preferably from 50 to 220°C, more preferably from 80 to 200°C.

8. The method according to any one of the preceding claims **characterized in that** the reaction of the at least one unsaturated compound and the at least one H-silane is carried out in an inert atmosphere.

9. The method according to any one of the preceding claims **characterized in that** the method comprises the method steps to be carried out in the given order:
A1) mixing the at least one H-silane, the Karstedt catalyst and the at least one cocatalyst according to formula (A) such that a premixture is obtained; and
A2) adding the at least one unsaturated compound to the premixture.

10. The method according to any one of the preceding claims **characterized in that** the at least one unsaturated compound is allyl chloride.

11. The method according to any one of the preceding claims **characterized in that** the at least one H-silane is trichlorosilane.

12. The method according to any one of the preceding claims **characterized in that** the at least one unsaturated compound is allyl chloride, the at least one H-silane is trichlorosilane and the at least one cocatalyst according to formula (A) is selected from the group consisting of *N,N-*dimethylaniline and N,N-dimethylbenzamide.

13. A catalyst composition suitable for mediating a hydrosilylation reaction, preferably the hydrosilylation reaction of at least one unsaturated compound selected from the group consisting of allyl halide and methallyl halide and at least one H-silane selected from the group consisting of trihalosilane, methyldihalosilane and dimethylhalosilane to give the 3-halopropyltrihalosilane compound, comprising
α) a Karstedt catalyst; and
β) at least one cocatalyst according to formula (A) : 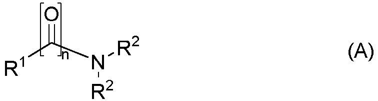 wherein
R¹ is an aryl group;
each R² is independently an alkyl group; and
n is selected from 0 and 1.

14. Use of the catalyst composition according to claim 13 in a hydrosilylation reaction, preferably in the hydrosilylation reaction of at least one unsaturated compound selected from the group consisting of allyl halide and methallyl halide and at least one H-silane selected from the group consisting of trihalosilane, methyldihalosilane and dimethylhalosilane to give the 3-halopropyltrihalosilane compound.

15. A reactive composition comprising
a) at least one unsaturated compound selected from the group consisting of allyl halide and methallyl halide;
b) at least one H-silane selected from the group consisting of trihalosilane, methyldihalosilane and dimethylhalosilane;
c) a Karstedt catalyst; and
d) at least one cocatalyst according to formula (A): 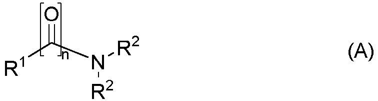 wherein
R¹ is an aryl group;
each R² is independently an alkyl group; and
n is selected from 0 and 1.

## Patentansprüche

1. Verfahren zur Synthese mindestens einer 3-Halogenpropyltrihalogensilanverbindung, umfassend das Umsetzen:
I) mindestens einer ungesättigten Verbindung, die aus der Gruppe bestehend aus Allylhalogenid und Methallylhalogenid ausgewählt ist; und
II) mindestens eines H-Silans, das aus der Gruppe bestehend aus Trihalogensilan, Methyldihalogensilan und Dimethylhalogensilan ausgewählt ist;
**dadurch gekennzeichnet, dass** die Umsetzung der mindestens einen ungesättigten Verbindung und des mindestens einen H-Silans in Gegenwart von Folgendem durchgeführt wird:
III) ein Karstedt-Katalysator; und
IV) mindestens ein Cokatalysator gemäß Formel (A): 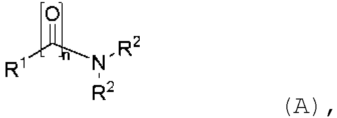 wobei
R¹ für eine Arylgruppe steht;
R² jeweils unabhängig für eine Alkylgruppe steht; und
n aus 0 und 1 ausgewählt ist.

2. Verfahren nach Anspruch 1, **dadurch gekennzeichnet, dass** R¹ für eine Phenylgruppe steht.

3. Verfahren nach einem der Ansprüche 1 und 2, **dadurch gekennzeichnet, dass** R² für eine C1-C4-Alkylgruppe, vorzugsweise eine Methylgruppe, steht.

4. Verfahren nach einem der vorhergehenden Ansprüche, **dadurch gekennzeichnet, dass** das Molverhältnis des mindestens einen Cokatalysators zu dem Karstedt-Katalysator im Bereich von 1 : 1 bis 100 : 1, bevorzugt von 2 : 1 bis 50 : 1, bevorzugter von 5 : 1 bis 25 : 1, liegt.

5. Verfahren nach einem der vorhergehenden Ansprüche, **dadurch gekennzeichnet, dass** das Molverhältnis der mindestens einen ungesättigten Verbindung zu dem mindestens einen H-Silan im Bereich von 2 : 1 bis 0,2 : 1, bevorzugt von 1,5 : 1 bis 0,5 : 1, bevorzugter von 1,2 : 1 bis 0,8 : 1, liegt.

6. Verfahren nach einem der vorhergehenden Ansprüche, **dadurch gekennzeichnet, dass** die Umsetzung der mindestens einen ungesättigten Verbindung und des mindestens einen H-Silans in mindestens einem Lösungsmittel durchgeführt wird, wobei es sich bei dem Lösungsmittel vorzugsweise um die mindestens eine 3-Halogenpropyltrihalogensilanverbindung handelt.

7. Verfahren nach einem der vorhergehenden Ansprüche, **dadurch gekennzeichnet, dass** die Umsetzung der mindestens einen ungesättigten Verbindung und des mindestens einen H-Silans bei einer Temperatur im Bereich von 30 bis 250 °C, bevorzugt von 50 bis 220 °C, bevorzugter von 80 bis 200 °C, durchgeführt wird.

8. Verfahren nach einem der vorhergehenden Ansprüche, **dadurch gekennzeichnet, dass** die Umsetzung der mindestens einen ungesättigten Verbindung und des mindestens einen H-Silans in einer inerten Atmosphäre durchgeführt wird.

9. Verfahren nach einem der vorhergehenden Ansprüche, **dadurch gekennzeichnet, dass** das Verfahren die in der gegebenen Reihenfolge durchzuführenden Verfahrensschritte umfasst:
A1) Mischen des mindestens einen H-Silans, des Karstedt-Katalysators und des mindestens einen Cokatalysators gemäß Formel (A), so dass eine Vormischung erhalten wird; und
A2) Zugeben der mindestens einen ungesättigten Verbindung zur Vormischung.

10. Verfahren nach einem der vorhergehenden Ansprüche, **dadurch gekennzeichnet, dass** es sich bei der mindestens einen ungesättigten Verbindung um Allylchlorid handelt.

11. Verfahren nach einem der vorhergehenden Ansprüche, **dadurch gekennzeichnet, dass** es sich bei dem mindestens einen H-Silan um Trichlorsilan handelt.

12. Verfahren nach einem der vorhergehenden Ansprüche, **dadurch gekennzeichnet, dass** es sich bei der mindestens einen ungesättigten Verbindung um Allylchlorid handelt, es sich bei dem mindestens einen H-Silan um Trichlorsilan handelt und der mindestens eine Cokatalysator gemäß Formel (A) aus der Gruppe bestehend aus N, N-Dimethylanilin und N, N-Dimethylbenzamid ausgewählt ist.

13. Katalysatorzusammensetzung, geeignet zum Vermitteln einer Hydrosilylierungsreaktion, vorzugsweise der Hydrosilylierungsreaktion mindestens einer ungesättigten Verbindung, die aus der Gruppe bestehend aus Allylhalogenid und Methallylhalogenid ausgewählt ist, und mindestens eines H-Silans, das aus der Gruppe bestehend aus Trihalogensilan, Methyldihalogensilan und Dimethylhalogensilan ausgewählt ist, unter Erhalt der 3-Halogenpropyltrihalogensilanverbindung, umfassend
α) einen Karstedt-Katalysator; und
β) mindestens einen Cokatalysator gemäß Formel (A): 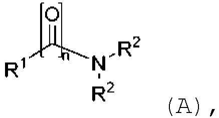 wobei
R¹ für eine Arylgruppe steht;
R² jeweils unabhängig für eine Alkylgruppe steht; und
n aus 0 und 1 ausgewählt ist.

14. Verwendung der Katalysatorzusammensetzung nach Anspruch 13 in einer Hydrosilylierungsreaktion, vorzugsweise in der Hydrosilylierungsreaktion mindestens einer ungesättigten Verbindung, die aus der Gruppe bestehend aus Allylhalogenid und Methallylhalogenid ausgewählt ist, und mindestens eines H-Silans, das aus der Gruppe bestehend aus Trihalogensilan, Methyldihalogensilan und Dimethylhalogensilan ausgewählt ist, unter Erhalt der 3-Halogenpropyltrihalogensilanverbindung.

15. Reaktive Zusammensetzung, umfassend
a) mindestens eine ungesättigte Verbindung, die aus der Gruppe bestehend aus Allylhalogenid und Methallylhalogenid ausgewählt ist,
b) mindestens ein H-Silan, das aus der Gruppe bestehend aus Trihalogensilan, Methyldihalogensilan und Dimethylhalogensilan ausgewählt ist,
c) einen Karstedt-Katalysator und
d) mindestens einen Cokatalysator gemäß Formel (A): 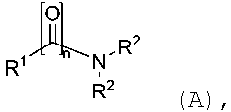 wobei
R¹ für eine Arylgruppe steht;
R² jeweils unabhängig für eine Alkylgruppe steht; und
n aus 0 und 1 ausgewählt ist.

## Revendications

1. Procédé de synthèse d'au moins un composé 3-halogénopropyltrihalogénosilane comprenant la mise en réaction :
I) d'au moins un composé insaturé choisi dans le groupe constitué par l'halogénure d'allyle et l'halogénure de méthallyle ; et
II) au moins un H-silane choisi dans le groupe constitué par un trihalogénosilane, un méthyldihalogénosilane et un diméthylhalogénosilane ;
**caractérisé en ce que** la réaction de l'au moins un composé insaturé et de l'au moins un H-silane est effectuée en présence de :
III) un catalyseur de Karstedt ; et
IV) au moins un cocatalyseur selon la formule (A) : 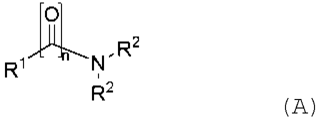 dans laquelle
R¹ est un groupe aryle ;
chaque R² est indépendamment un groupe alkyle ; et
n est choisi parmi 0 et 1.

2. Procédé selon la revendication 1, **caractérisé en ce que** R¹ est un groupe phényle.

3. Procédé selon l'une quelconque des revendications 1 et 2, **caractérisé en ce que** R² est un groupe alkyle en C1-C4, de préférence un groupe méthyle.

4. Procédé selon l'une quelconque des revendications précédentes, **caractérisé en ce que** le rapport molaire de l'au moins un cocatalyseur sur le catalyseur de Karstedt est dans la plage de 1 : 1 à 100 : 1, de préférence de 2 : 1 à 50 : 1, plus préférablement de 5 : 1 à 25 : 1.

5. Procédé selon l'une quelconque des revendications précédentes, **caractérisé en ce que** le rapport molaire de l'au moins un composé insaturé sur l'au moins un H-silane est dans la plage de 2 : 1 à 0,2 : 1, de préférence de 1,5 : 1 à 0,5 : 1, plus préférablement de 1,2 : 1 à 0,8 : 1.

6. Procédé selon l'une quelconque des revendications précédentes, **caractérisé en ce que** la réaction de l'au moins un composé insaturé et de l'au moins un H-silane est effectuée dans au moins un solvant, le solvant étant de préférence l'au moins un composé 3-halogénopropyltrihalogénosilane.

7. Procédé selon l'une quelconque des revendications précédentes, **caractérisé en ce que** la réaction de l'au moins un composé insaturé et de l'au moins un H-silane est effectuée à une température dans la plage de 30 à 250 °C, de préférence de 50 à 220 °C, plus préférablement de 80 à 200 °C.

8. Procédé selon l'une quelconque des revendications précédentes, **caractérisé en ce que** la réaction de l'au moins un composé insaturé et de l'au moins un H-silane est effectuée dans une atmosphère inerte.

9. Procédé selon l'une quelconque des revendications précédentes, **caractérisé en ce que** le procédé comprend les étapes de procédé à exécuter dans l'ordre donné :
A1) mélange du H-silane, du catalyseur de Karstedt et du cocatalyseur selon la formule (A) de manière à obtenir un prémélange ; et
A2) ajout de l'au moins un composé insaturé au prémélange.

10. Procédé selon l'une quelconque des revendications précédentes, **caractérisé en ce que** l'au moins un composé insaturé est le chlorure d'allyle.

11. Procédé selon l'une quelconque des revendications précédentes, **caractérisé en ce que** l'au moins un H-silane est le trichlorosilane.

12. Procédé selon l'une quelconque des revendications précédentes, **caractérisé en ce que** l'au moins un composé insaturé est le chlorure d'allyle, l'au moins un H-silane est le trichlorosilane et l'au moins un cocatalyseur selon la formule (A) est choisi dans le groupe constitué par la N,N-diméthylaniline et le N,N-diméthylbenzamide.

13. Composition catalytique appropriée pour induire une réaction d'hydrosilylation, de préférence la réaction d'hydrosilylation d'au moins un composé insaturé choisi dans le groupe constitué par un halogénure d'allyle et un halogénure de méthallyle et d'au moins un H-silane choisi dans le groupe constitué par un trihalogénosilane, un méthyldihalogénosilane et un diméthylhalogénosilane pour donner le composé 3-halogénopropyltrihalogénosilane, comprenant
α) un catalyseur de Karstedt ; et
β) au moins un cocatalyseur selon la formule (A) : 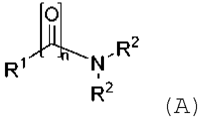 dans laquelle
R¹ est un groupe aryle ;
chaque R² est indépendamment un groupe alkyle ; et
n est choisi parmi 0 et 1.

14. Utilisation de la composition de catalyseur selon la revendication 13 dans une réaction d'hydrosilylation, de préférence dans la réaction d'hydrosilylation d'au moins un composé insaturé choisi dans le groupe constitué par un halogénure d'allyle et un halogénure de méthallyle et d'au moins un H-silane choisi dans le groupe constitué par un trihalogénosilane, un méthyldihalogénosilane et un diméthylhalogénosilane pour donner le composé 3-halogénopropyltrihalogénosilane.

15. Composition réactive, comprenant :
a) au moins un composé insaturé choisi dans le groupe constitué par un halogénure d'allyle et un halogénure de méthallyle ;
b) au moins un H-silane choisi dans le groupe constitué par un trihalogénosilane, un méthyldihalogénosilane et un diméthylhalogénosilane ;
c) un catalyseur de Karstedt ; et
d) au moins un cocatalyseur selon la formule (A) : 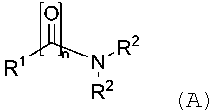 dans laquelle
R¹ est un groupe aryle ;
chaque R² est indépendamment un groupe alkyle ; et
n est choisi parmi 0 et 1.
